# EUROPÄISCHE PATENTANMELDUNG

(11) **EP 2 194 264 A1**
(43) Veröffentlichungstag der Anmeldung: **09.06.2010**
(21) Anmeldenummer: 08170619.4
(22) Anmeldetag: 03.12.2008
(51) Int. Cl.: F03B 17/06, F03D 5/00, F03D 9/00, B63H 9/04

(54) **Verfahren bzw. Kraftwerk zum Gewinnen nutzbarer Energie aus Windkraft**

(71) Anmelder: Zehle, Arndt, 22605 Hamburg (DE)
(72) Erfinder: Zehle, Arndt, 22605 Hamburg (DE)
(74) Vertreter: Raffay & Fleck

(57) **Zusammenfassung**

Ein Verfahren zum Gewinnen nutzbarer Energie aus Windkraft unter Verwendung wenigstens eines mit einem eine Anströmung in eine Rotationsbewegung umsetzenden Antrieb (13) versehenen elektrischen Generators, bei zumindest die für die Umsetzung der Anströmung in eine Rotationsbewegung erforderlichen Teile des Antriebes mit Mitteln (5,6) zur Umsetzung einer Windkraft in Vortrieb verbunden sind und mit Hilfe von auf diesen Mitteln (5,6) astender Windkraft durch ein Gewässer derart fortbewegt werden, dass durch die aufgrund der Relativbewegung zwischen dem Wasser des Gewässers und den für die Umsetzung der Anströmung in die Rotationsbewegung erforderlichen Teile des Antriebes (13) eine den Generator antreibende Antriebskraft entsteht.

Ferner wird ein Kraftwerk zur Gewinnung nutzbarer Energie aus Windkraft offenbart mit wenigstens einem mit einem in einem Gewässer unterhalb der Wasseroberfläche (7) angeordneten und durch das Wasser bewegbaren Antrieb (13) zur Umsetzung einer Anströmung in eine Rotationsbewegung verbundenen elektrischen Generator, wobei zumindest der Antrieb (13) mit einem Mittel (5, 6) zum Umsetzen einer Windkraft in Vortrieb verbunden ist.

## Beschreibung

Die Erfindung betrifft ein Verfahren zum Gewinnen nutzbarer Energie aus Windkraft. Sie betrifft ferner ein neuartiges Kraftwerk zur Gewinnung nutzbarer Energie aus Windkraft.

Als Energieträger werden klassischer Weise fossile Brennstoffe verwendet. Sie kommen zum Betrieb von Motoren in Kraftfahrzeugen, Schiffen und Luftfahrzeugen ebenso zum Einsatz wie bei der Erzeugung elektrischen Stromes in Kraftwerken. Diese Form der Energiegewinnung ist nicht nur aufgrund der beschränkten Ressourcen an fossilen Brennstoffen problematisch, sie führt zudem aufgrund ihres hohen Ausstoßes an Kohlendioxid zu dem sogenannten Treibhauseffekt und den viel diskutierten klimatischen Auswirkungen mit der globalen Erwärmung.

Eine weitere Möglichkeit der Energiegewinnung, die heute breit und weithin angewandt wird, ist die Ausbeutung der Kernspaltung. Auf diesem Prinzip beruhen nicht nur elektrische Kraftwerke, auch Fahrzeuge, insbesondere Unterseeboote, aber auch andere Schiffe wie etwa Eisbrecher oder dgl., werden mit dieser Energieform angetrieben.

Zwar wird bei der Nutzung der Kernenergie kein klimaschädliches Kohlendioxid freigesetzt, jedoch ist der Umgang mit den radioaktiven Ausgangsmaterialien und insbesondere Zerfallsprodukten hochgradig risikobehaftet. Darüber hinaus ist vielfach, so auch in Deutschland, die Frage nach einer endgültigen und sicheren Lagerung der Abfallprodukte bis zum Abklingen deren Radioaktivität gänzlich ungeklärt, weshalb die Nutzung der Kernenergie von weiten Teilen der Bevölkerung abgelehnt wird.

Bereits heute sind auf der Suche nach der Nutzung alternativer Energieformen verschiedentliche Vorschläge gemacht worden und auch Technologien entwickelt. Schon lange ist im Bereich der Stromerzeugung die Nutzung von Wasserkraft bekannt. Dort wird die in einem ein Gefälle herabströmenden Wasserstrom enthaltene Energie von Turbinen aufgenommen und mit dieser Energie Generatoren angetrieben, die letztlich den Strom produzieren. Bei dieser Art der Energieerzeugung werden keine schädlichen Treibhausgase freigesetzt, und es entsteht kein Problem mit der Abfallentsorgung. Allerdings sind die Standorte, an denen derartige Wasserkraftwerke errichtet werden können, begrenzt. Insbesondere lässt sich eine flächendeckende Vollversorgung mit aus Wasserkraft gewonnener Energie nicht erreichen.

Ein weiterer Ansatz besteht in der Nutzung von Solarenergie. Mit aus Halbleiterbauelementen bestehenden, neuerdings auch aus organischen Molekülen aufgebauten Solarzellen wird die im Sonnenlicht enthaltene Energie in elektrische Energie umgesetzt. Jedoch sind bis heute großtechnische Anlagen zur Nutzung dieser Energieform kaum realisiert, es bestehen darüber hinaus ökologische Bedenken gegenüber der Herstellung der Solarzellen, und die Energiebilanz, d.h. das Verhältnis zwischen mit den Solarzellen gewonnener Energie und der für deren Herstellung, Transport, Aufstellung und Wartung eingesetzten Energie, ist fraglich.

Ein weiterer Zweig der sogenannten alternativen Energiegewinnung, der aktuell sehr stark verfolgt wird, ist die Nutzung von Windenergie. Im Bereich der Stromerzeugung beschränkt sich die Nutzung der Windenergie allerdings auf stationär aufgestellte Windenergieanlagen, deren Aufstellungsorte ursprünglich ausschließlich landgebunden, derzeit aber auch vermehrt offshore auf See liegen.

Windenergieanlagen sind an ein elektrisches Versorgungsnetzt angeschlossen und können jedenfalls nach heutigen Erkenntnissen und Gesichtspunkten nicht, jedenfalls nicht ohne weiteres, zur Grundlastversorgung herangezogen werden. Dies liegt insbesondere daran, dass die Stärke des nutzbaren Windes und damit letztlich der Eintrag der Windenergie stark schwankend ist, so dass eine für die Abdeckung einer Grundlast erforderliche im wesentlichen gleichbleibende Leistungsabgabe mit diesen Kraftwerken nicht möglich ist. Auch sind die möglichen Aufstellungsorte von Windenergieanlagen an Land beschränkt, einerseits wegen nicht überall gegebener, geeigneter Windverhältnisse, andererseits wegen bestehender Bedenken der Bevölkerung in landschaftsästhetischer Hinsicht. Auch ansonsten sind Windkraftanlagen ökologisch nicht ausschließlich unbedenklich, sie erzeugen mit ihren Rotatoren Windgeräusche und werfen bewegte Schatten, welche ggf. Tiere erschrecken und führen nicht zuletzt auch zu einer Bodenversiegelung.

Bei Aufstellungsorten offshore ist der Nutzen der Windkraft noch fraglicher. Zum einen ergeben sich Korrosionsprobleme aufgrund der extrem salzhaltigen und feuchten Umgebung am Aufstellungsort, die nicht nur kostenaufwendige, sondern auch energieintensive Wartungs- und Reparaturmaßnahmen erforderlich machen. Darüber hinaus stellt das Verankern der offshore angeordneten Windenergieanlagen im Meeresgrund mit dem dafür erforderlichen hohen Aufwand des Fundamentbaus ebenfalls einen rigiden Eingriff in das maritime Ökosystem dar: Hier wird die Bodenstruktur verändert und damit der Lebensraum unterschiedlichster Tierarten beeinträchtigt, schlimmstenfalls sogar zerstört. Auch die Geräuschentwicklung der Windparks und die Hindernisse im Wasser in Form der bis zum Meeresgrund reichenden Türme sind ökologisch nicht unbedenklich.

Es gibt also nach wie vor einen sehr großen Bedarf, eine Möglichkeit der Energiegewinnung zu finden, die klimaneutral ist, ohne gefährliche oder schädliche Abfallprodukte durchgeführt werden kann und auch ansonsten so wenig als möglich einen Eingriff in die Umwelt darstellt.

Hier setzt die Erfindung an. Mit ihr soll ein Verfahren zum Gewinnen nutzbarer Energie aus Windkraft angegeben werden, das den oben aufgezeichneten Ansprüchen genügt. Darüber hinaus soll ein neuartiges Kraftwerk angegeben werden.

Diese Aufgabe wird hinsichtlich des Verfahrens gelöst durch ein Verfahren zum Gewinnen nutzbarer Energie aus Windkraft mit den Merkmalen des Anspruchs 1. In Anspruch 9 ist ein die Aufgabe lösendes erfindungsgemäßes Kraftwerk mit seinen wesentlichen und erfindungsrelevanten Merkmalen bezeichnet. Die Ansprüche 2 bis 8 enthalten vorteilhafte Weiterbildungen des Verfahrens, in den Ansprüchen 10 bis 15 sind bevorzugte Abwandlungen und Weiterbildungen des erfindungsgemäßen Kraftwerkes angegeben.

Die wesentliche Idee der Erfindung beruht darauf, die Windenergie nicht, wie bisher bekannt und angewandt zum Antrieb eines Propellers oder sonstigen Mechanismus einer stehenden Energiegewinnungsanlage zu verwenden, sondern vielmehr den Antrieb eines Generators, z.B. einer Turbine oder dgl., selbst über Windkraft in Bewegung zu setzen und durch ein Gewässer zu führen. So entsteht eine Relativbewegung zwischen dem Antrieb und dem Wasser des Gewässers, die zu einer Anströmung des Antriebes durch das Wasser führt und so den Antrieb antreibt und letztlich den Generator, der dann Strom erzeugt. Durch die Nutzung des so geschilderten Prinzips wird ein wesentlicher Freiheitsgrad gewonnen, der es erlaubt, Energiegewinnung nach diesem Verfahren im großen Stile zu betreiben. Die Energiegewinnung ist so nämlich nicht mehr an einen festgelegten und vorgegebenen Standort, sei es an Land oder sei es offshore, gebunden. Vielmehr kann ein sich insgesamt unabhängig bewegendes, windgetriebenes System geschaffen werden, welches auf einer Gewässerfläche sich fortbewegt und dabei Energie gewinnt. Die Gewässerflächen können insbesondere die großen Ozeane sein, deren Gesamtfläche den weit überwiegenden Anteil der Erdoberfläche ausmacht und die insoweit ausreichend Raum für den vielfältigen Einsatz des erfindungsgemäßen Verfahrens bieten. Natürlich kann das Verfahren aber auch auf anderen Gewässern, z.B. den großen Seen, wie etwa den großen nordamerikanischen Seen, den afrikanischen Seen wie Tansaniasee oder dgl. eingesetzt werden.

In der Regel werden der Generator und sein Antrieb dabei nicht unmittelbar mit einem Windkraft in Vortrieb umsetzenden Mittel verbunden, sondern sie werden auf einem Auftriebskörper angeordnet, der insbesondere als Schiffs- oder Bootskörper ausgebildet sein kann. Den Vortrieb können insbesondere Segel, aber auch lenkbar geführte Drachen, Flettner-Rotoren oder andere Windkraft in Vortrieb umsetzende Mechanismen besorgen. Unter dem Begriff Segel im Sinne dieser Erfindung soll im allgemeinen ein aus flexiblem Material gebildetes, tuchartiges Mittel verstanden werden, welches an einem Schiff oder sonstigen Auftriebskörper entsprechend aufgespannt der Umwandlung von Windenergie in Vortrieb dient, sowie auch Konstruktionen aus mehreren solchen einzelnen Mitteln, wie z.B. Kastensegel.

In der Praxis können also Boote bzw. große Schiffe gebaut werden, die herkömmlichen Segelschiffen ähneln und gleichermaßen als fahrbare Kraftwerke Generatoren sowie die mit dem vorbeiströmenden bzw. anströmenden Wasserwechselwirkenden Antrieb an Bord haben. Solchermaßen ausgerüstete Schiffe bzw. Boote können insgesamt gezielt und ausschließlich zur Gewinnung von Energie, also als Kraftwerke eingesetzt werden.

Es leuchtet ein, dass bei einem solchen autarken Einsatz die mit dem Generator gewonnene elektrische Energie nicht unmittelbar einem Versorgungsnetz zugeführt und in dieses eingespeist werden kann. Natürlich wäre es grundsätzlich möglich, z.B. beim Einsatz auf einem Binnengewässer, eine elektrische Leitung hin zu dem Generator zu führen und diesen so mit einem Netz zu verbinden, allerdings ist ein solcher Anschluss an ein Versorgungsnetz spätestens dann unmöglich, wenn die Energiegewinnung auf einem der Weltmeere erfolgt, auf dem ein solches Vehikel sich befindet und dieses zum Zwecke der Energiegewinnung kreuzt. Insofern ist es von besonderem Vorteil und insbesondere im Sinne der Erfindung, wenn im Zuge des Verfahrens die gewonnene elektrische Energie gespeichert wird. Hierzu können z.B. elektrische Speicher wie etwa Akkumulatoren, Kondensatoren oder dgl. verwendet werden. Da bei der Speicherung elektrischer Energie in solchen Einrichtungen jedoch in der Regel mit der Zeit Verluste zu verzeichnen sind und ein erfindungsgemäßes Kraftwerk bei einem Einsatz auf den Weltmeeren längere Zeit unterwegs sein wird, bevor es wieder anlandet, wird die Speicherung der Energie in anderer, insbesondere chemischer oder physikalischer Form bevorzugt. So kann für eine physikalische Speicherung von Energie z.B. ein Speichermedium, z.B. Luft komprimiert werden, es kann ein Speichermedium hinsichtlich seiner Temperatur verändert werden, oder dieses kann Änderungen seines Aggregatzustandes ausgesetzt werden. Bei einer chemischen Energiespeicherung kommt jede Form einer reversiblen Reaktion in Frage, die nur unter Einsatz von Energie abläuft und in umgekehrter Reaktionsrichtung Energie freisetzt.

Insbesondere kann dabei das ohnehin in der Umgebung vorhandene Wasser elektrochemisch, insbesondere mittels Elektrolyse, zersetzt werden, und es kann der dabei frei werdende Wasserstoff aufgefangen und als Energieträger gespeichert werden. Für die Speicherung des Wasserstoffs kommen dabei alle an sich bekannten Methoden in Frage, z.B. Komprimierung, Einlagerung in porösen Molekülen oder dgl. Hierfür sind diverse Techniken aus dem Stand der Technik bekannt. Sinnvoller Weise wird die für die Einlagerung und Aufbereitung des Wasserstoffes erforderliche Energie der mit dem Kraftwerk bzw. mit dem Verfahren gewonnenen Energie abgezweigt und entnommen, so dass nicht auf in anderer Weise erzeugte Energie zurückgegriffen werden muss. Wird für die Speicherung der Energie die Zerlegung von Wasser zu Wasserstoff und Sauerstoff gewählt, kann auch der dabei frei werdende Sauerstoff aufgefangen und gespeichert werden. Dieser kann z.B. als wertvolles Wirtschafts- und Industriegas verwertet werden.

Die Speicherung der so gewonnenen Energie in Form von Wasserstoff hat darüber hinaus den Vorteil, dass diese sich in einfacher Weise z.B. nach einem Anlanden eines erfindungsgemäßen Kraftwerkes in einem Hafen oder dgl. Anlage, verfrachten lässt zu den gewünschten Einsatzorten. Dabei kann z.B. als Energiespeicher genutzter Wasserstoff dezentral wieder z.B. in einer Brennstoffzelle in elektrische Energie umgesetzt werden. Das dabei als "Abfallprodukt" entstehende Wasser kann aufgefangen und gesammelt und dem Wasserkreislauf gezielt zugeführt werden. Auf diese Weise kann z.B. in wasserarmen Gebieten nicht nur Energie gewonnen, sondern es kann auch als Brauch- oder Trinkwasser geeignetes Wasser (für eine Verwendung als Trinkwasser muss das Wasser noch mit Mineralien und weiteren Inhaltsstoffen natürlichen Wassers versetzt werden) genutzt werden. Neben der Gewinnung von Energie auf ökologisch unbedenkliche Weise fällt hier sozusagen als "Beiprodukt" noch ein weiterer wertvoller Rohstoff, nämlich Wasser, in größeren Mengen an.

Aufgrund der in größerer Menge verfügbaren Wasserfläche können erfindungsgemäße Kraftwerke in großer Vielzahl eingesetzt werden, so dass eine mögliche Verringerung des Wirkungsgrades aufgrund einer Zwischenspeicherung der Energie z.B. in Wasserstoff ohne weiteres in Kauf genommen werden kann.

Weitere Vorteile und Merkmale der Erfindung ergeben sich aus der nachfolgenden Beschreibung eines Ausführungsbeispiels anhand der beigefügten Figur. Dabei zeigen:

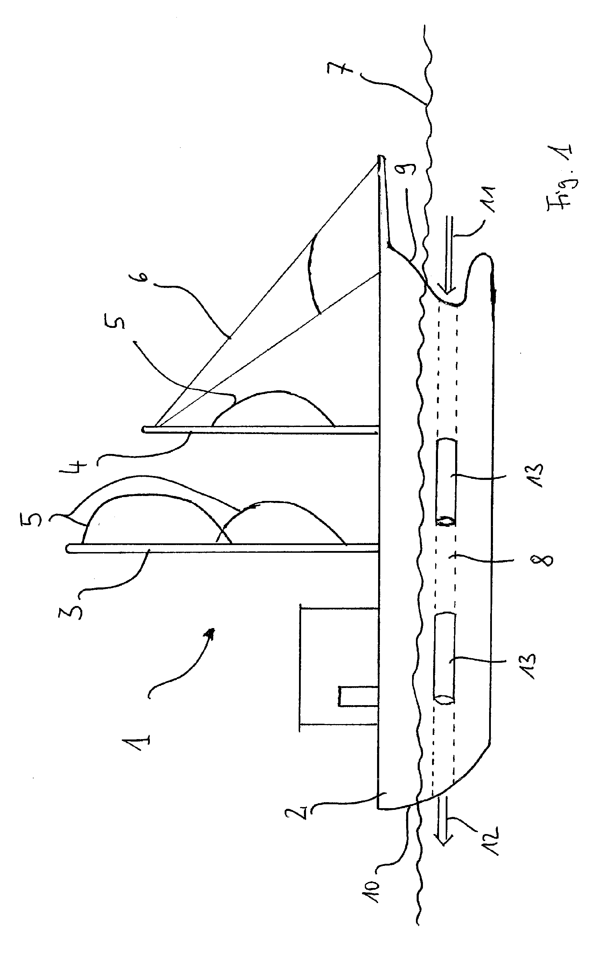

- Fig. 1: schematisch die Darstellung eines in erfindungsgemäßer Weise als Kraftwerk ausgebildetes bzw. mit einem Kraftwerk ausgestattetes Segelschiff, mit welchem das erfindungsgemäße Verfahren durchgeführt werden kann.

In Fig. 1 ist in stark schematischer Prinzipdarstellung ein in erfindungsgemäßer Weise als Segelschiff 1 ausgebildetes Kraftwerk der erfindungsgemäßen Ausgestaltung gezeigt. Das Segelschiff 1 besitzt einen Rumpf 2, auf dem Masten 3, 4 errichtet sind mit daran angeordneten Segeln 5 und 6. Die Segel 5 und 6 dienen in an sich bekannter Weise zur Umsetzung von darauf einwirkender Windkraft in Vortrieb. Das Segelschiff 1 befindet sich mit seinem Rumpf 2 eingetaucht in das Wasser 7 eines Gewässers, z.B. im Meerwasser. Im Bereich unterhalb der Oberfläche des Wassers 7 ist in dem Rumpf 2 ein in Längsrichtung des Segelschiffes 1 verlaufender Kanal 8 ausgebildet, der am Bug 9 sowie am Heck 10 des Segelschiffes 1 jeweils eine Öffnung aufweist und durchgängig gebildet ist. Aufgrund der durch die Windkraft ausgelösten Relativbewegung des Segelschiffes 1 gegenüber dem Wasser 7 strömt in den Kanal 8 am Bug 9 fortwährend Wasser ein, durchströmt den Kanal 8 und strömt am Heck 10 wieder aus. Dies ist durch Pfeile 11 und 12 symbolisiert. Im Inneren des Kanals 8 sind hier schematisch angedeutet hintereinander liegend zwei Turbinen 13 angeordnet mit daran angeschlossenen, hier nicht näher gezeigten Generatoren. Diese Turbinen 13 werden durch das durch den Kanal 8 hindurchströmende Wasser angetrieben, so dass die mit den Turbinen 13 verbundenen Generatoren Strom, also elektrische Energie, erzeugen.

Hier nicht näher dargestellt sind im Inneren des Rumpfes 2 des Segelschiffes 1 angeordnete Einheiten zum Speichern der von den Turbinen 13 erzeugten elektrischen Energie. Die elektrische Energie wird genutzt, um Elektrolyseeinheiten zu betreiben, die aus dem im Gewässer ohnehin vorhandenen Wasser durch Zersetzung Wasserstoff gewinnen. Dieser Wasserstoff wird in geeignete Speicherbehälter verbracht, die wesentliche Teile des Lagerraumes des Segelschiffes 1 ausfüllen. Dabei ist natürlich die entsprechende Sorge zu tragen für die Betriebssicherheit, um weder das Segelschiff 1 selbst noch eine dieses bedienenden und navigierenden Crew etwa zu gefährden.

Mit Vorteil werden jedenfalls große Teile der an Bord des Segelschiffes 1 für die Navigation und den weiteren Betrieb (z.B. einen motorischen Antrieb für die Navigation bei Windstille oder die Ein- und Ausfahrt in einen Hafen) benötigte Energie abgezweigt aus der mit den Turbinen 13 erzeugten Energie. Dieses als Kraftwerk ausgebildete Segelschiff 1 kann nun ähnlich wie Fracht- oder andere Schiffe eine längere Zeit autark das Meer durchfahren und z.B. auf einem geeigneten Dreieckskurs unter Ausnutzung von in einzelnen Regionen der Weltmeere vorherrschenden, weitgehend konstanten Windbedingungen Fahrt machen zur Gewinnung von elektrischer Energie und anschließender Umsetzung derselben in chemische Energie in Form von Wasserstoff. Selbstverständlich kann das Schiff neben der Möglichkeit der Speicherung der Energie als Wasserstoff auch noch Akkumulatoren oder weitere Speichermöglichkeiten zum Speichern der Energie enthalten.

Nach vorgegebener Zeit und Fahrtdauer steuert das als Kraftwerk ausgebildete Segelschiff 1 einen Hafen an, wo die gespeicherte Energie "entladen" werden kann, z.B. durch Entleeren oder Entladen der gefüllten Wasserstofftanks. Im Anschluss daran steht das als Kraftwerk ausgebildete Segelschiff 1 wieder für weitere Energiegewinnungsfahrten zur Verfügung.

Natürlich ist es grundsätzlich denkbar, das Segelschiff 1 in einer gemischten Nutzungsform einzusetzen und mit diesem neben der Gewinnung nutzbarer Energie auch noch z.B. Transportaufgaben oder dgl. zu bestreiten. Bevorzugt wird allerdings die reine Nutzung als Kraftwerk, insbesondere da für eine möglichst in hohem Anteil gegebene Umsetzung der Windenergie in elektrische Energie ein großer Anteil des Vortriebes des Windes in die Anströmung der Turbinen 13 umgesetzt werden soll und nicht in ein zügiges Vorwärtsfahren des Segelschiffes 1. Entsprechend ist es für eine effiziente Energiegewinnung sogar von Vorteil, wenn das Segelschiff 1 vergleichsweise wenig Fahrt macht, ein Umstand, der bei einer Verwendung des Segelschiffes 1 zusätzlich auch für Transportzwecke sich negativ auswirkt.

In der Fig. 1 ist schematisch ein einziger Kanal 8 im Inneren des Rumpfes 2 des Segelschiffes 1 dargestellt. Selbstverständlich können in dem Rumpf 2 zur Erhöhung der Energieausbeute auch zwei oder mehr Kanäle vorgesehen sein, in denen in beliebiger Zahl Turbinen oder andere Antriebseinheiten zum Betreiben von Generatoren untergebracht sein können. Gleichermaßen ist es auch denkbar, alternativ oder zusätzlich die Antriebe der Generatoren nicht im Rumpf des Segelschiffes 1 selbst, sondern an an diesem Rumpf 2 befestigten Auslegern anzuordnen.

Ferner ist der Kanal 8 hier durchgehend in einer gleichbleibenden Breite dargestellt. Auch dies ist nicht zwingend erforderlich. Vielmehr ist es denkbar, den Kanal 8 im Querschnitt zu verjüngen, um höhere Strömungsgeschwindigkeiten und bessere Betriebsbedingungen für z.B. Turbinen oder dgl. zu erhalten. Hier wird der Fachmann unter einfachem Rückgriff auf sein Fachwissen in einfacher Weise Optimierungsarbeit vornehmen und die geeignete Ausgestaltung im Sinne einer möglichst hohen Energieausbeute vornehmen.

Aus der vorangegangenen Beschreibung des Ausführungsbeispiels ist noch einmal deutlich geworden, welchen klaren und deutlichen Vorteil hinsichtlich der ökologischen Bewertung und auch der Flexibilität bei der Energiegewinnung das erfindungsgemäße Verfahren und das der Erfindung folgende Kraftwerk bedeuten. Dabei soll die Erfindung nicht auf die Umsetzung in dem Ausführungsbeispiel beschränkt sein, sie wird in ihrer allgemeinen Form durch die nachfolgenden Ansprüche definiert. Insbesondere ist es auch denkbar, das Schiff nicht mit Segeln, sondern mit Lenkdrachen oder aber zur Erhöhung der Effizienz zusammen mit Segeln und Lenkdrachen fortzutreiben. Auch ist es überhaupt denkbar, anstelle eines Schiffes eine luftgebundene Plattform zu verwenden, die über entsprechende Einrichtungen wie etwa Seile und dgl. mit einem im Wasser mitgeführten bzw. geschleppten Generator bzw. Antrieb für denselben verbunden ist. Die weiteren Einrichtungen, insbesondere die Energiespeicher, können sich in der luftgebundenen Plattform befinden.

Dies sind nur einige der möglichen Abwandlungen, die sich für den Fachmann ohne weiteres aufgrund des Studiums der voranstehenden Beschreibung und der nachfolgenden Patentansprüche ergeben werden.

### Bezugszeichenliste

- 1: Segelschiff
- 2: Rumpf
- 3: Mast
- 4: Mast
- 5: Segel
- 6: Segel
- 7: Wasser
- 8: Kanal
- 9: Bug
- 10: Heck
- 11: Pfeil
- 1 2: Pfeil
- 13: Turbine

## Patentansprüche

1. Verfahren zum Gewinnen nutzbarer Energie aus Windkraft unter Verwendung wenigstens eines mit einem eine Anströmung in eine Rotationsbewegung umsetzenden Antrieb versehenen elektrischen Generators, bei zumindest die für die Umsetzung der Anströmung in eine Rotationsbewegung erforderlichen Teile des Antriebes mit Mitteln zur Umsetzung einer Windkraft in Vortrieb verbunden sind und mit Hilfe von auf diesen Mitteln lastender Windkraft durch ein Gewässer derart fortbewegt werden, dass durch die aufgrund der Relativbewegung zwischen dem Wasser des Gewässers und den für die Umsetzung der Anströmung in die Rotationsbewegung erforderlichen Teile des Antriebes eine den Generator antreibende Antriebskraft entsteht.

2. Verfahren nach Anspruch 1, **dadurch gekennzeichnet, dass** der wenigstens eine Generator mit dem Antrieb auf einem in dem Gewässer schwimmenden und mit den Mitteln zur Umsetzung der Windkraft in Vortrieb verbundenen Auftriebskörper angeordnet ist.

3. Verfahren nach Anspruch 2, **dadurch gekennzeichnet, dass** der Auftriebskörper ein Schiffs- oder Bootskörper ist.

4. Verfahren nach einem der Ansprüche 1 bis 3, **dadurch gekennzeichnet, dass** als Mittel zur Umsetzung der Windkraft in Vortrieb wenigstens ein Segel und/oder wenigstens ein an einer Leine lenkbar geführter Drachen und/oder wenigstens ein Flettner-Rotor verwendet wird.

5. Verfahren nach einem der vorhergehenden Ansprüche, **dadurch gekennzeichnet, dass** zum Betreiben des Generators wenigstens eine Turbine verwendet wird.

6. Verfahren nach einem der vorhergehenden Ansprüche, **dadurch gekennzeichnet, dass** die elektrische Energie gespeichert wird.

7. Verfahren nach Anspruch 2 und 6, **dadurch gekennzeichnet, dass** Speichermittel zum Speichern der Energie auf den Auftriebskörper angeordnet sind und mit diesem mitgeführt werden.

8. Verfahren nach einem der Ansprüche 6 bis 7, **dadurch gekennzeichnet, dass** die Energie chemisch gespeichert wird, insbesondere in Form von aus mittels der elektrischen Energie zersetztem Wasser gewonnen Wasserstoff.

9. Kraftwerk zur Gewinnung nutzbarer Energie aus Windkraft mit wenigstens einem mit einem in einem Gewässer unterhalb der Wasseroberfläche angeordneten und durch das Wasser bewegbaren Antrieb (13) zur Umsetzung einer Anströmung in eine Rotationsbewegung verbundenen elektrischen Generator, wobei zumindest der Antrieb (13) mit einem Mittel (5, 6) zum Umsetzen einer Windkraft in Vortrieb verbunden ist.

10. Kraftwerk nach Anspruch 9, **dadurch gekennzeichnet, dass** es einen Auftriebskörper (2) umfasst bzw. auf einem solchen angeordnet ist, der für ein unabhängiges Manövrieren auf dem Gewässer ausgelegt ist.

11. Kraftwerk nach Anspruch 10, **dadurch gekennzeichnet, dass** es als Schiff (1) oder Boot gebildet bzw. auf einem solchen angeordnet ist und dass an dem Schiff (1) oder Boot wenigstens ein Segel (5, 6) und/oder wenigstens ein lenkbarer Drachen und/oder wenigstens ein Flettner-Rotor für die Erzeugung eines Vortriebs in dem Gewässer angeordnet sind.

12. Kraftwerk nach Anspruch 11, **dadurch gekennzeichnet, dass** der wenigstens eine Antrieb (13) für den wenigstens einen Generator in einem in oder an dem Schiffs- oder Bootsrumpf (2) gebildeten, von dem in dem Gewässer enthaltenen Wasser durchströmbaren Kanal (8) angeordnet ist.

13. Kraftwerk nach einem der Ansprüche 11 oder 12, **dadurch gekennzeichnet, dass** der wenigstens eine Antrieb (13) für den wenigstens einen Generator an einem mit dem Schiff- oder Bootsrumpf (2) verbundenen Ausleger angeordnet ist.

14. Kraftwerk nach einem der Ansprüche 11 bis 13, **dadurch gekennzeichnet, dass** das Schiff (1) oder Boot einen motorischen Antrieb aufweist, der mit Hilfe der durch das Kraftwerk gewonnenen Energie betreibbar ist.

15. Kraftwerk nach einem der Ansprüche 9 bis 14, **dadurch gekennzeichnet, dass** es zudem Speichermittel zum Speicher der durch den Generator erzeugten elektrischen Energie aufweist, insbesondere in Form einer Einrichtung zum elektrochemischen Aufspalten von Wasser und wenigstens einem Wasserstoffspeicher zum Speichern des bei dem Aufspalten des Wassers frei gewordenen Wasserstoffes.
